# EUROPEAN PATENT APPLICATION

(11) **EP 2 279 972 A1**
(43) Date of publication of application: **02.02.2011**
(21) Application number: 10170128.2
(22) Date of filing: 20.07.2010
(51) Int. Cl.: B65G 49/06, C03B 33/02, B65H 5/22, B65H 29/24, B65H 11/00

(54) **Vertical working center for flat glass sheets**

(30) Priority: 29.07.2009 IT PD20090227
(71) Applicant: SKG S.r.l., 36015 Schio VI (IT)
(72) Inventor: Dal santo, Beniamino, 36010, ZANE' VI (IT)
(74) Representative: Modiano, Micaela Nadia

(57) **Abstract**

A vertical working center for flat glass sheets, of the type that comprises
- an inclined input roller bed (11),
- a central frame (12), which supports equipment for working the sheets (13),
- an inclined exit roller bed (14).

The equipment for working the sheets comprises means (15) for working the edges and means (16) for providing holes; a sheet (13) is moved and retained in an inclined configuration, at the equipment, by devices for vacuum grip by means of a belt (17, 18, 19, 20, 21), which are arranged so as to grip a surface of the sheet.

## Description

The present invention relates to a vertical working center for flat glass sheets.

Currently, mainly two vertical types of machines for working flat glass sheets are known.

First of all, it is specified that the term "vertical" designates the configuration of the sheet during its working, which is not exactly vertical with respect to the ground but inclined with an inclination between 10° and 30° with respect to a vertical plane.

These vertical working machines generally comprise an inclined roller bed, i.e., an inclined frame with resting and sliding rollers for the sheet, for sending a sheet to the working equipment, a machine body that contains the equipment for the automatic working of the sheets, and an inclined exit roller bed, where the worked sheets arrive and are available to be picked up.

The roller beds are provided with means for handling the sheets.

A first type of these vertical machines for working flat glass sheets is constituted by the automatic vertical arrissing machine.

The arrissing machine is designed to work the edges of a glass sheet.

The second type of machine, termed automatic vertical drilling machine, is indeed designed to provide holes in the sheet and in general to provide through openings.

These types of machine, despite being widespread and appreciated, have some drawbacks that will be described hereinafter.

A drawback of the vertical automatic arrissing machine is the fact that the sheets are moved from the input roller bed to the working equipment by means of sucker devices.

These sucker devices adhere to the glass and are then translated horizontally by means of the translational motion of a bar that carries them.

These sucker devices thus move jointly with the glass sheet and for this reason it is not possible to perform hole forming operations on the glass sheet carried by the sucker devices; indeed, on one side of the glass sheet there are the sucker devices and the means that carry such sucker devices, so that in the portions of glass at which there are the suckers and the means that carry the suckers it is not physically possible to provide through openings or holes.

Moreover, machines for working the arrissing edges do not have the sheet gripping means with opposite heads that are necessary to also perform a hole forming operation without damaging the sheet, such damage, even if it is small, being able to cause actual shattering during hardening.

On the other hand, the drawback of the second type of machine, the currently known machines for automatically providing holes, is the fact that they have means for handling the sheets, for example with translatable lateral grippers, which have a significant lateral space occupation.

This gripping system, moreover, does not make it possible to work directly on the sheet with arrissing equipment, a task which instead the sucker devices of dedicated arrissing machines perform fully.

The aim of the present invention is to devise a working center capable of eliminating the above mentioned drawbacks of known types of machines.

Within this aim, an object of the invention is to devise a working center capable of performing hole forming operations as well as milling, beveling, grinding, polishing and arrissing operations.

Another object of the invention is to develop a working center in which the sheets are retained in a stable manner so that arrissing and other similar operations can be executed, but which at the same time allows the locking of said sheets with means that do not produce obstacles for a hole forming operation or other similar operations.

Another object of the invention is to devise a working center that has a limited space occupation and is not bigger than known types of machine.

Another object of the invention is to provide a working center that can be implemented by means of known technologies and plants.

This aim and these and other objects which will become better apparent hereinafter are achieved by a vertical working center for flat glass sheets, of the type that comprises
- an inclined input roller bed
- a central frame, which supports equipment for working the sheets,
- an inclined exit roller bed,
the working center being **characterized in that** said equipment for working the sheets comprises means for working the edges and means for providing holes, a sheet being moved and retained in an inclined configuration, at said equipment, by means of devices for vacuum grip by means of a belt, which operate on a surface of the sheet to be worked or being worked.

Further characteristics and advantages of the invention will become better apparent from the following detailed description of a preferred but not exclusive embodiment of the working center for flat glass sheets according to the invention, illustrated by way of non-limiting example in the accompanying drawings, wherein:
Figure 1 is a front perspective view of a working center according to the invention;

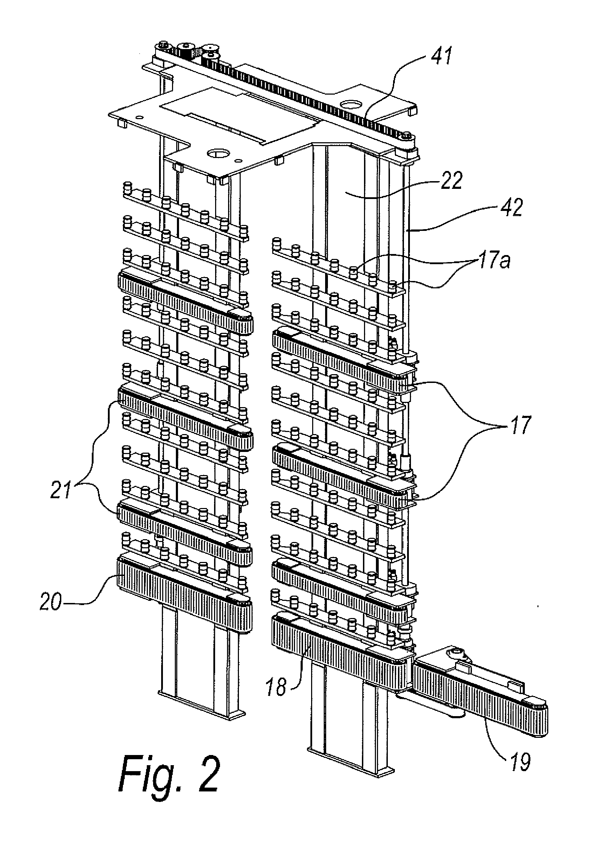

Figure 2 is a first front perspective view of the vacuum grip devices;

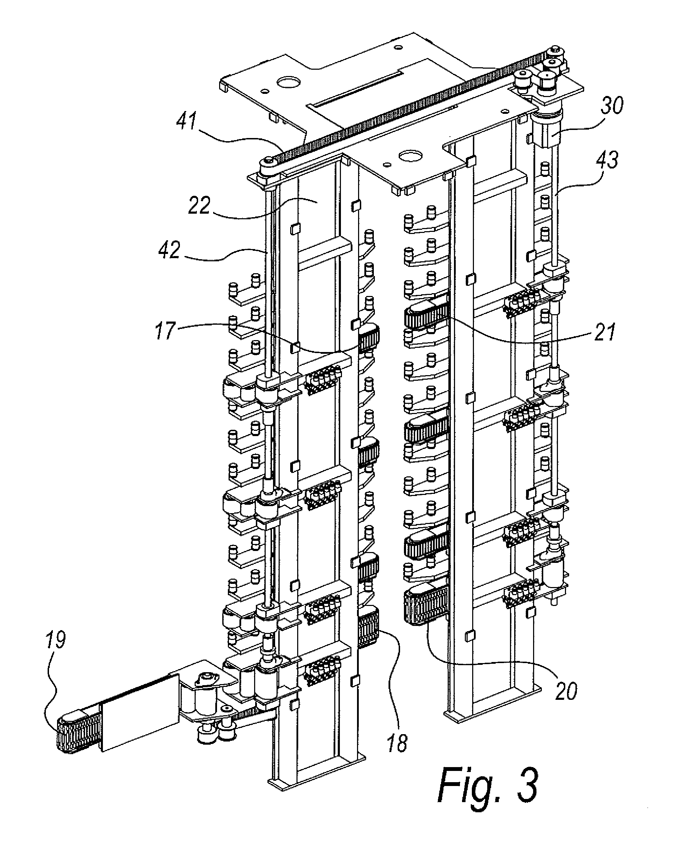

Figure 3 is a second rear perspective view of the vacuum grip devices;
Figure 4 is a view of a device for vacuum grip by means of a belt;

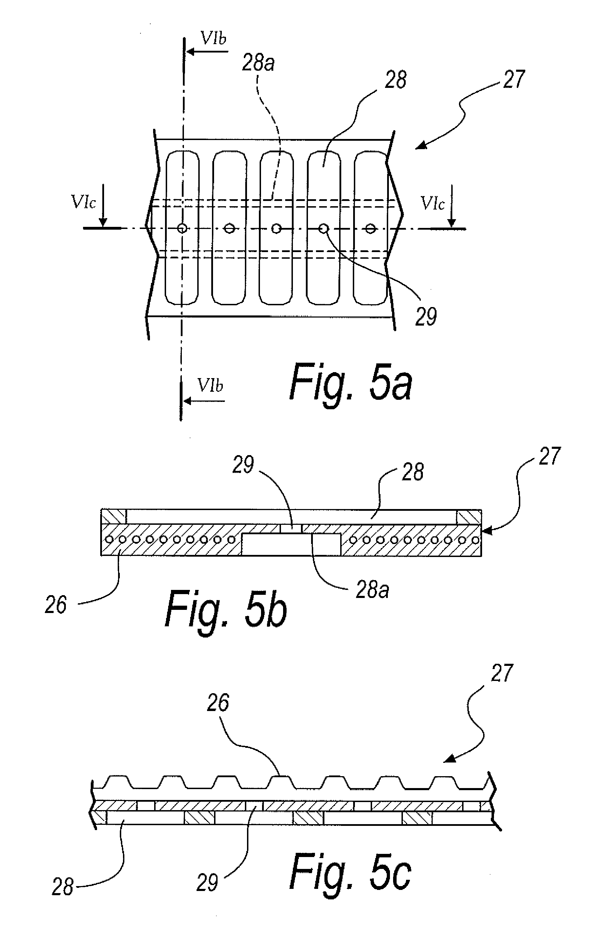

Figure 5 is an exploded view of the device of Figure 4;
Figure 5a is a front view of a portion of a detail of the belt of Figure 4;
Figure 5b is a sectional view, taken along the line VI-VI of Figure 5a;
Figure 5c is a sectional view, taken along the line VII-VII of Figure 5a;
Figure 6 is a sectional side view of the working center according to the invention;
Figure 7 is a top view of the equipment of the working center according to the invention.

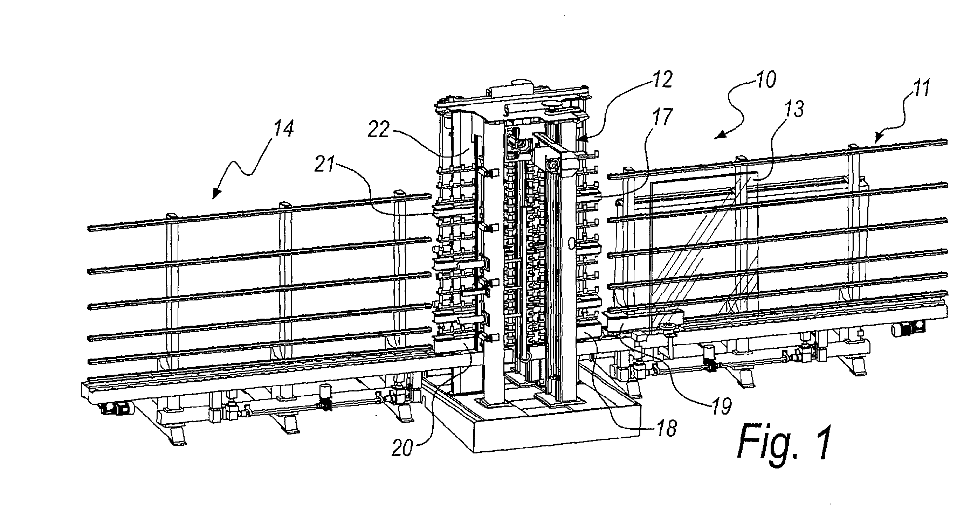

With reference to the figures, a vertical working center for flat glass sheets according to the invention is generally designated in Figure 1 by the reference numeral 10.

The vertical working center 10 is of the type that comprises
- an inclined input roller bed 11
- a central frame 12, which supports equipment for working the sheets, for example a sheet 13,
- an inclined exit roller bed 14.

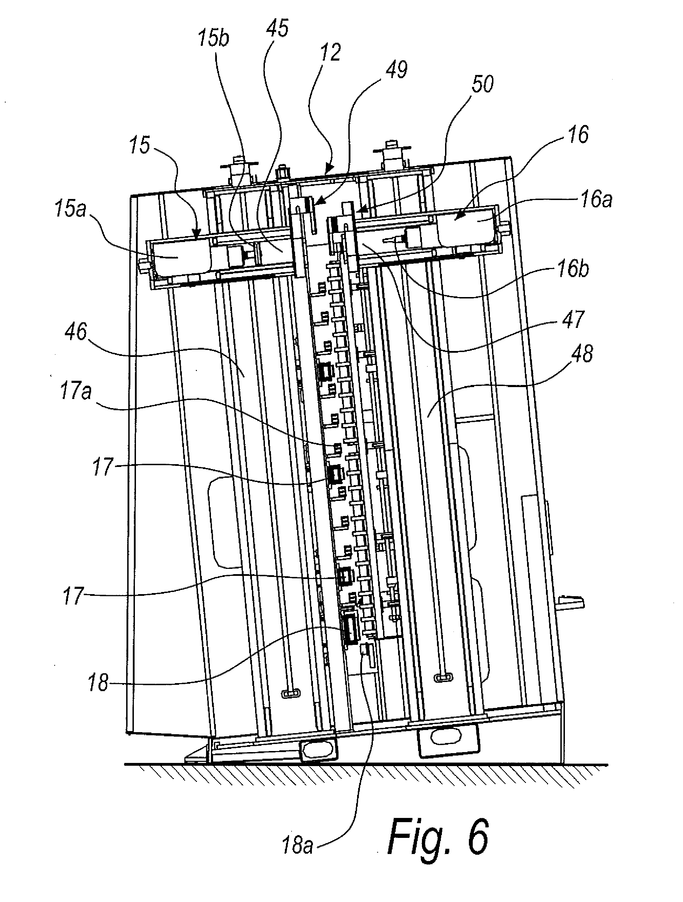

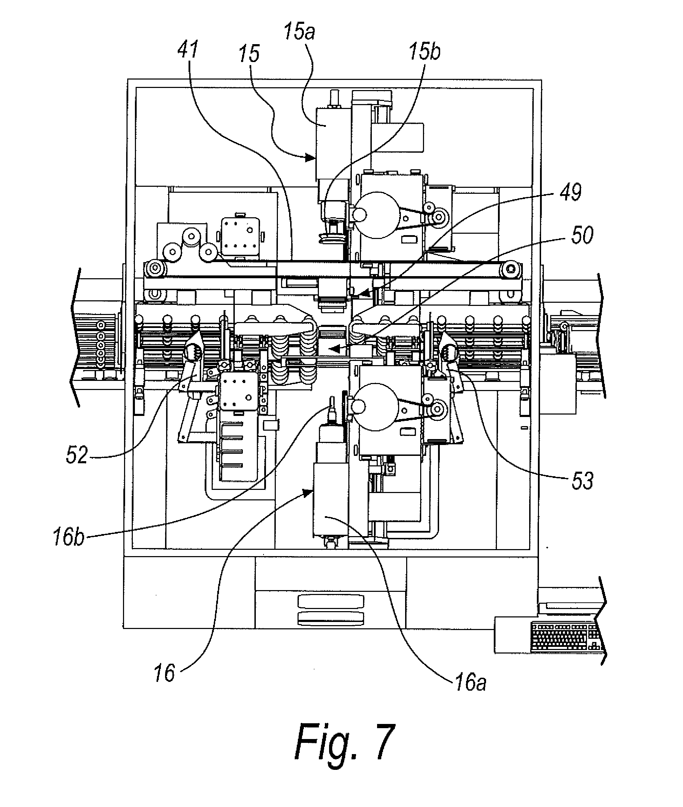

The working center 10 is **characterized in that** the equipment for working the sheets comprises both means for working the edges and means for providing holes, clearly visible in Figures 6 and 7.

These figures, by way of example, illustrate respectively means 15 for working the edges and means 16 for providing holes.

The generic sheet 13 is moved and retained in an inclined configuration, at the equipment, by means of devices for vacuum grip by means of a belt 17, 18, 19, 20 and 21, which are arranged so as to grip a surface of the sheet to be worked or being worked.

These vacuum grip devices, described in more detail hereinafter, are carried by a portion of the back 22 of the frame 12.

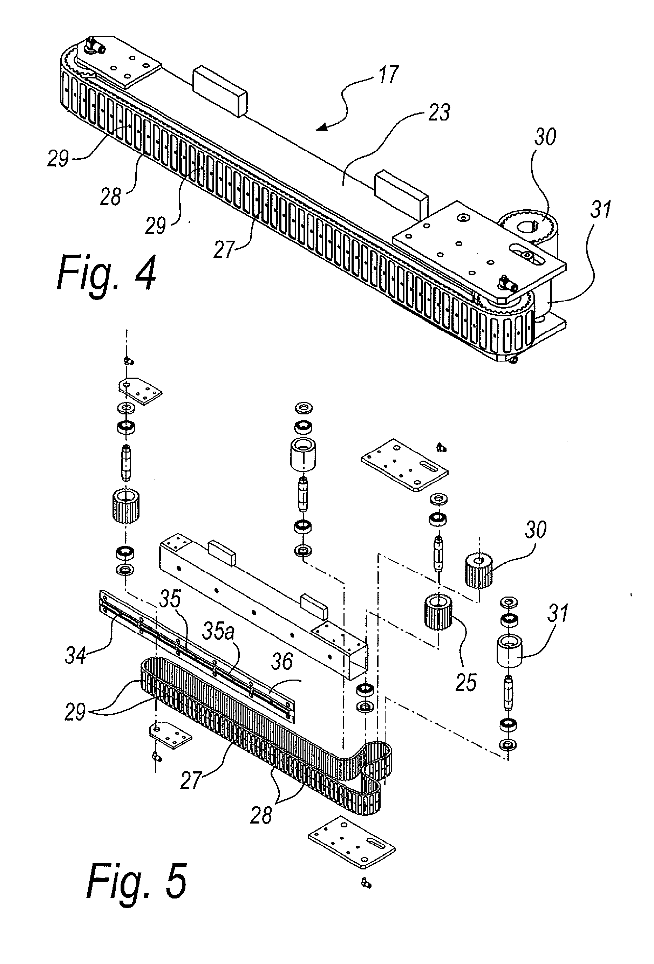

Figure 4 shows a first device 17, whose embodiment is to be understood as being similar for the other devices 18, 19, 20 and 21, and in general as a non-limiting example of the invention.

The first vacuum device 17 comprises a supporting body 23, constituted for example by a metallic profile that has a U-shaped cross-section, to the ends of which gears 24, 25 are pivoted which are adapted to mesh with the internal teeth 26 of the belt 27.

On the outer face of the belt 27, which is made of plastics or of another similar and equivalent material, a plurality of side-by-side suction recesses 28 are defined, at each of which a through hole 29 is provided.

There is also a belt tensioning wheel 30 with a floating roller 31, which is fundamental for keeping the belt 27 in contact with the front face 32 of the supporting body 23.

The front face 32 is provided with equidistant suction holes 33.

Each hole 33 is arranged so as to draw air, by means of a second corresponding hole 34, from longitudinal cavities 35 formed in a plate 36 that is fixed above the front face 32 of the body 23.

The teeth 26 of the belt 27 are interrupted in their central portion by a channel 28a, which runs along the entire length of the belt 27 and has a cross-section that is contoured so as to slide on the longitudinal protrusions 35a that form the longitudinal walls of the longitudinal cavities 35; the channel 28a allows correct suction by means of the holes 29 of the belt 27 and by means of the holes of the plate 36.

The belt 27 slides on the plate 36 so that its holes 29 can slide at the aligned longitudinal cavities 25.

The body 23 carries, screwed to the corresponding suction holes 33, couplings for suction tubes, not shown for the sake of simplicity, which in turn are connected to an external pneumatic system, which is not shown and is to to be understood as being of a type known per se.

Each one of the suction recesses 28 works on the sheet 13 as a sucker, which moves with the belt 27 and releases the sheet when it reaches the end wheel, for example 24.

The longitudinal suction cavities 35 are each placed in a vacuum by an independent suction tube controlled by an associated valve.

Therefore, it is possible to choose how many and which of the cavities 35 are to be activated, depending on the type of grip that one wishes to take on the sheet.

Three first devices 17, for input to the working equipment, are shown in the non-limiting constructive example described herein, spaced from the bottom upward, so as to provide the grip and the entrainment of a sheet 13 in a manner that is balanced at different heights, both during movement and, above all, during the working of the sheet 13.

One or more rows of sliding rollers 17a are interposed between two successive first devices 17 and have an axis that is substantially parallel to the arrangement of the sheet 13.

The second device 18, also for input to the equipment, is designed to grip the sheet 13 near the lower edge of contact of the sheet 13 with the supporting rollers 18a at an axis that is perpendicular to the arrangement of the sheet 13, a large part of the weight of the sheet 13 being transmitted onto the supporting rollers 18a.

A third device 19 for vacuum grip by means of a belt cooperates with the motorized supporting rollers of the input roller bed 11 to accompany the sheet 13 from the input roller bed 11 toward the first and second grip devices 17 and 18.

The third grip device 19 is actuated by the same electric motor 40 that actuates the other devices, too, and thus is synchronized with the other grip devices 17, 18, 20 and 21.

In a further embodiment, not shown, of the working center according to the invention, which however must be considered as being within the scope of the appended claims, the devices for vacuum grip by means of a belt can be moved by more than one electric motor.

The fourth vacuum grip devices 20, with the fifth vacuum grip device 21, together with the first and second vacuum grip devices 17 and 18, retain the sheet 13 during work and then, when work has ended, push it toward the exit roller bed 14.

The electric motor 40, which is supported by the same back 22 of the frame 12, moves all the devices by means of a toothed belt 41, which moves two guiding shafts 42 and 43, a first shaft 42 for the first, second and third devices 17, 18 and 19, and a second shaft 43 for the fourth and fifth devices 20 and 21.

The use of these vacuum grip devices 17 and following makes it possible to move and retain the sheet 13, taking it from the translational motion means with motorized rollers of the input roller bed 11, without however moving the grip means 17 and following into the central work area, where the means for working the edges and for providing holes are arranged for operation.

In fact, the vacuum grip devices 17 and following are per se stationary and the sheet 13 is moved solely thanks to the movement of the belt 27, whereas in machines of the known type, the sucker devices move with the sheet, arranging themselves disadvantageously at the work area.

The means for working the edges and for providing holes in the sheet are represented herein, by way of non-limiting example of the invention, by two electric spindles, both of which are provided with tool magazines so as to allow both to perform hole forming operations and arrissing, grinding, beveling, polishing and milling operations; Figures 6 and 7 illustrate a first electric spindle 15a, served by a tool magazine, for example with ten positions, with tools 15b for arrissing, which are to be understood as being of a type known per se.

A second electric spindle 16a, which is to be considered as also having a tool magazine, which carries tools for performing hole forming operations and grinding, milling, arrissing and beveling operations, is shown supporting a tool 16b for providing holes.

The two electric spindles 15a, 16a work on parallel but distinct axes and from opposite directions.

Figure 6 shows that the first spindle 15a slides on a first guide 45 at right angles to the sheet 13; the first guide 45 in turn can perform a translational motion downward and upward on a second guide 46 at right angles to the first guide 45 which is fixed to the frame 12.

Likewise, the second electric spindle 16a slides on a first guide 47 in a direction orthogonal to the sheet 13; the first guide 47 in turn can perform a translational motion downward and upward on a second guide 48 at right angles to the first guide 47 and fixed to the frame 12.

The two electric spindles 15a and 16a are independent both in their operation and in the respective automatic movement means, which are to be understood as being known, and can be programmed so as to work simultaneously on the sheet 13.

As mentioned, both electric spindles 15a and 16a are equipped for hole forming operations, grinding, milling, arrissing, beveling and polishing operations.

In order to allow perfect hole forming operations, there are two opposite pressers 49 and 50 of a type known per se.

The pressers 49 and 50 are adapted to close on the sheet 13, locking it exactly in the region surrounding the point where the hole is to be provided.

In input to and in output from the arrissing means 15 and the hole forming means 16, there are blower devices 52 and 53 for cleaning the sheets 13, by means of which air is injected over the entire height of the sheet 13.

The blower devices 52 and 53 replace the typical brushes and allow in particular a gentler cleaning of the sheets made of low-emissivity glass, which are very delicate.

In practice it has been found that the invention achieves the intended aim and objects.

In particular, the invention has provided a working center capable of performing hole forming operations and arrissing, grinding, beveling, milling and polishing operations.

Moreover, the invention has provided a working center in which the sheets are retained in a stable manner so as to be able to perform arrissing operations and other similar operations thereon, but at the same time it allows locking of these sheets with means that do not create obstacles for a hole forming operation or other similar operations.

The invention allows to develop a working center that has a limited space occupation which is not higher than that of machines of the known type.

Moreover, the invention provides a working center that can be manufactured with known technologies and plants.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. PD2009A000227 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A vertical working center for flat glass sheets, of the type that comprises
- an inclined input roller bed (11)
- a central frame (12), which supports equipment for working the sheets (13),
- an inclined exit roller bed (14),
said working center (10) being **characterized in that** the equipment for working the sheets comprises means (15, 16) for working the edges, for providing holes and for other similar operations, a sheet (13) being moved and retained in an inclined configuration, at said equipment, by devices for vacuum grip by means of a belt (17, 18, 19, 20, 21), which are arranged so as to grip a surface of the sheet to be worked or being worked.

2. The working center according to claim 1, **characterized in that** a device for vacuum grip by means of a belt (17) comprises a supporting body (23), constituted for example by a metallic profile that has a U-shaped cross-section, to the ends of which gears (24, 25) are pivoted which are adapted to mesh with the internal teeth (26) of a belt (27), a plurality of side-by-side suction recesses (28) being formed on the outer face of the belt (27), a through hole (29) being provided at each one of said recesses, the front face (32) of said supporting body (23) being provided with equidistant suction holes (33) onto which corresponding couplings for suction tubes are to be screwed, which in turn are connected to an external pneumatic system.

3. The working center according to the preceding claims, **characterized in that** each hole (33) is arranged so as to draw air, by means of a second corresponding hole (34), from a corresponding number of longitudinal cavities (35) formed on a plate (36) that is fixed above the front face (32) of the body (23), said belt (27) being adapted to slide on said plate (36) so that its holes (29) slide at the aligned longitudinal cavities (25).

4. The working center according to the preceding claims, **characterized in that** each device for vacuum grip by means of a belt (17, 18, 19, 20, 21) also has a belt tensioning wheel (30) with a floating roller (31).

5. The working center according to the preceding claims, **characterized in that** the longitudinal suction cavities (35) are each placed under vacuum by an independent suction tube managed by an associated valve.

6. The working center according to the preceding claims, **characterized in that** said devices for vacuum grip by means of a belt (17, 18, 19, 20, 21) are positioned stably on the two opposite sides of the work area.

7. The working center according to the preceding claims, **characterized in that** said means (15, 16) for working the edges and for providing holes in the sheet comprises two electric spindles (15a, 16a), both of which are provided with tool magazines such as to allow for both the execution both of hole forming operations and of arrissing, grinding, beveling, polishing and milling operations.

8. The working center according to the preceding claims, **characterized in** said two electric spindles (15a, 16a) work on parallel and distinct axes and from opposite directions, each electric spindle (15a, 16a) being arranged so as to slide on a first guide (45, 47) at right angles to the sheet (13), the first guide (45, 47) being in turn adapted to perform a downward and an upward translational motion on a second guide (46, 48) perpendicular to the first guide (45, 47) and fixed to the frame (12).
